# EUROPÄISCHE PATENTSCHRIFT

(11) **EP 0 745 508 B1**
(45) Veröffentlichungstag und Bekanntmachung des Hinweises auf die Patenterteilung: **25.09.2002**
(21) Anmeldenummer: 96107521.5
(22) Anmeldetag: 10.05.1996
(51) Int. Cl.: B60N 2/44

(54) **Verfahren zur Herstellung des Rahmens der Lehne eines KFZ-Sitzes**
Method for making a seat back frame of an automotive vehicle
Procédé de fabrication de l'armature d'un dossier d'un siège de véhicule automobile

(30) Priorität: 10.05.1995 AT 78695
(43) Veröffentlichungstag der Anmeldung: 04.12.1996
(73) Patentinhaber: Euromotive Gesellschaft m.b.H., 5282 Ranshofen (AT)
(72) Erfinder: Garnweidner, Peter, A-5112 Lamprechtshausen (AT)
(74) Vertreter: WILHELMS, KILIAN & PARTNER Patentanwälte

(56) Entgegenhaltungen:
- EP-A- 0 625 445
- WO-A-93/16896
- DE-A- 4 138 647
- DE-C- 4 315 521

## Beschreibung

Die Erfindung betrifft ein Verfahren zur Herstellung eines aus zwei Längsholmen und einem Querholm bestehenden, etwa U-förmigen Rahmens einer Lehne eines Kraftfahrzeugsitzes, bei welchem die Längsholme aus einem ursprünglich geraden, bandartig flachen Strang- oder Walzenprofil mit über seine Länge konstanter Querschnittsfläche gebildet werden (Siehe z.B. DE-A-43 155 21).

Lehnenrahmen von Kraftfahrzeugsitzen bestehen im Normalfall aus Metall und haben die Form eines auf dem Kopf stehenden U. Die Schenkel des U werden im Folgenden als Längsholme bezeichnet, das Basisstück als Querholm.

Der Lehnenrahmen wird bei frontalen Stößen (von hinten oder von vorne) auf das Fahrzeug am stärksten belastet, wenn die den Sitz benützende Person mit Rumpf und Kopf gegen Lehne und Kopfstütze geschleudert wird.

Die größten Belastungen treten an den Verbindungsstellen zwischen Lehnenrahmen und Fahrzeugsitz sowie an den Verbindungsstellen zwischen Lehnenrahmen und Kopfstütze auf. Diese Belastungen sind Biegemomente um eine waagrechte, quer zur Fahrtrichtung liegende Achse. An den Enden der Längsholme ist der Lehnenrahmen auf Biegung beansprucht, an den Stellen der Kopfstützenbefestigung auf Torsion.

Im Sinne des Leichtbaues sollte das den Lehnenrahmen bildende Metallteil an allen Stellen eine der standzuhaltenden Maximalbelastung angepaßte Querschnittsfläche aufweisen.

Bei den häufig verwendeten Lehnenrahmen, welche aus einem gebogenen Rundrohr gebildet werden, tritt in diesem Sinne der Nachteil auf, daß die durch die Stellen größter Belastung bedingte Mindestquerschnittsfläche auch an jenen Stellen beibehalten werden muß, an denen niemals eine große Belastung auftritt.

Bei Rahmen, welche als Magnesium-Druckgußteil gefertigt werden, ist eine gute Anpassung der Querschnittsfläche an die zu erwartende Belastung möglich. Begrenzungen ergeben sich durch die gießtechnisch bedingte Mindestwandstärke des Bauteiles. Nachteilig sind auch die hohen Kosten der Gießform, der hohe Materialpreis, die geringe Duktilität (geringe Bruchdehnung) von Gußlegierungen und der erforderliche hohe Aufwand zur Vermeidung bzw. Erkennung von Gießfehlern wie Lunkern oder Poren.

Bei Rahmen, welche aus gefalteten und gebogenen Blechen gebildet werden, ergeben sich Begrenzungen dadurch, daß die Bleche an allen Stellen die gleiche Dicke haben. Eine große Blechdicke ist aber nur an den Verbindungsstellen des Lehnenrahmens mit dem Sitzrahmen und den Kopfstützenbügeln sowie in den auf Biegung beanspruchten Zonen an den von der neutralen Faser weit entfernt liegenden Querschnittsbereichen erwünscht. An allen anderen Stellen wäre eine kleinere Blechstärke erwünscht, da dort nie eine große Belastung auftritt.

Aus der o.g. DE-A-43 155 21 ist ein Verfahren zur Herstellung eines aus zwei Längsholmen und einem Querholm bestehenden, etwa U-förmigen Rahmens einer Lehne eines Kraftfahrzeuges bekannt, bei dem die Längsholme aus einem ursprünglich geraden, bandartig flachen Strangpreßprofil mit über seine Länge konstanter Querschnittsfläche gebildet werden und schwache und starke Bereiche in symmetrischer Anordnung vorgesehen sind. Bei diesem Verfahren werden weiterhin die beanspruchten Querschnittsbereiche um in den schwachen Bereichen liegende Biegeachsen um etwa 90° gebogen.

Die der Erfindung zugrunde liegende Aufgabe besteht demgegenüber darin, ein Verfahren der eingangs genannten Art zu schaffen, mit dem es möglich ist, die Querschnittsfläche des Profilteils, aus dem die Längsholme und der Querholm besteht, an die an den jeweiligen Stellen jeweils zu erwartende Maximalbeanspruchung anzupassen.

Diese Aufgabe wird gemäß der Erfindung dadurch gelöst, daß auf eine starke Mittelzone der über die Breite des Profilteils gehenden Querschnittsfläche des Profilteiles, aus welchem die Längsholme gebildet werden, beiderseits ein schwacher Bereich und ein sich daran anschließender starker Bereich folgen, daß das Profil so beschnitten wird, daß seine Breite mit steigender Entfernung von beiden Enden kontinuierlich abnimmt, und daß bezüglich der starken Mittelzone außenliegende Querschnittsbereiche der Profilquerschnittsfläche um Biegeachsen, welche in den schwachen Bereichen liegen, um etwa 90° gebogen werden.

Besonders bevorzugte Weiterbildungen und Ausgestaltungen des erfindungsgemäßen Verfahrens sind Gegenstand der Patentansprüche 2 bis 4.

Die Erfindung wird im Folgenden anhand der Zeichnungen näher beschrieben:

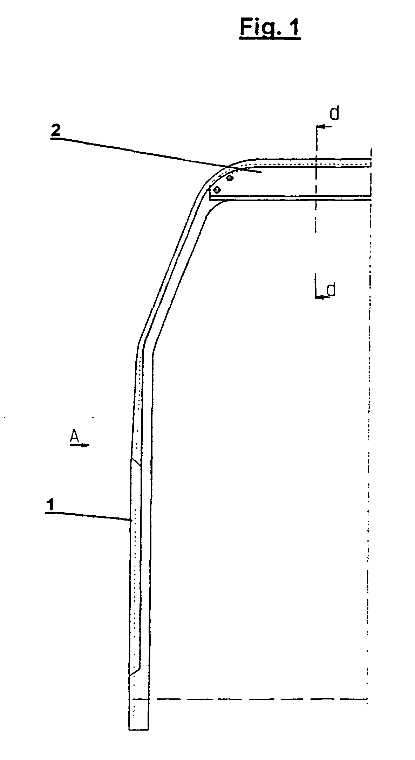

Fig. 1 zeigt eine Hälfte eines Lehnenrahmens in einer Frontalansicht.
Fig. 2 zeigt den Rahmen von Fig. 1 in der Seitenansicht A gemäß Fig. 1.
Fig. 3 zeigt die Querschnittsfläche des als Ausgangsmaterial verwendeten Profilteiles.
Fig. 4 zeigt das Profilteil nach dem Stanzen und den Biegevorgängen um Achsen, welche in den schwachen Querschnittsbereichen des Profils liegen, woher die Kontur des Profilteiles vor dem Stanzen und vor den Biegevorgängen strichliert angedeutet ist.

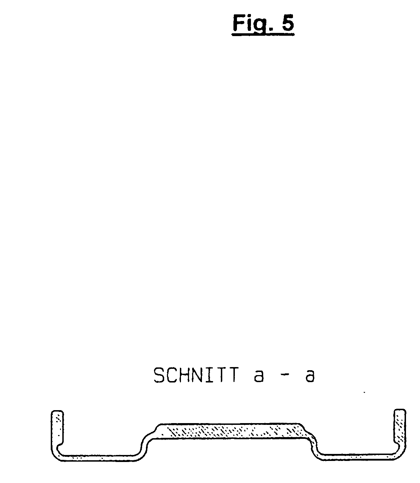

Fig. 5 zeigt die Schnittfläche durch einen Längsholm entsprechend der Schnittebene a-a gemäß Fig. 2.

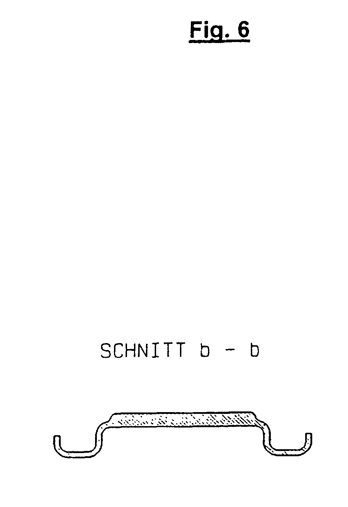

Fig. 6 zeigt die Schnittfläche durch einen Längsholm entsprechend der Schnittebene b-b gemäß Fig. 2
Fig. 7 zeigt die Schnittfläche durch den Querholm entsprechend der Schnittebene d-d gemäß Fig. 2
Fig. 8 zeigt die Schnittfläche durch den Querholm entsprechend der Schnittebene d-d gemäß Fig. 2 bei einer Variante der Erfindung.

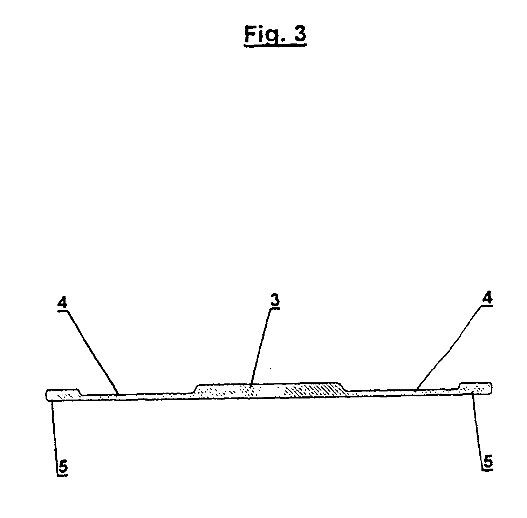

Wie in Figur 3 ersichtlich, besteht die Profilquerschnittsfläche aus einer starken Mittelzone 3, daran anschließenden schwächeren Bereichen 4 und daran anschließenden stärkeren Bereichen 5. Die Breite der Mittelzone 3 muß genügend groß sein, damit der Lochkreis 10, mit Hilfe dessen der Lehnenrahmen über Niete oder Schrauben und Gelenkstücken am Sitzflächenrahmen befestigt wird, darauf Platz finden kann. Die Breite der schwächeren Profilbereiche 4 ist etwa gleich dem halben Unterschied der Breiten zwischen den breitesten Stellen der Längsholme 1 und dem Querholm 2 in der auf die Lehnenebene normalen Richtung.

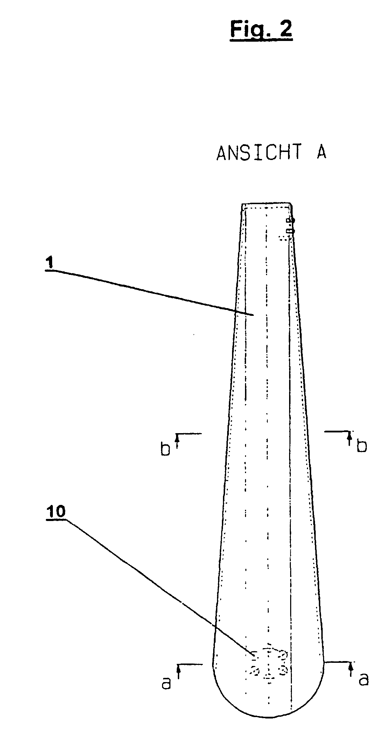

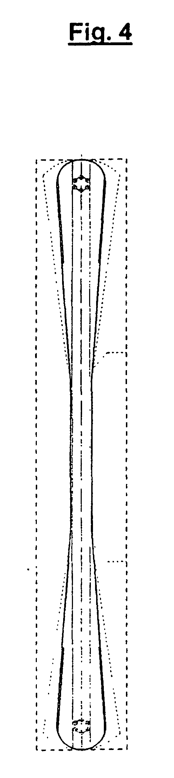

Die Längsbereiche des Profilstückes, deren Breite von beiden Enden her kontinuierlich abnimmt (Fig. 2, Fig. 4), entsprechen den Längen der Längsholme 1. Aus den außen liegenden starken Profilzonen 5 werden im Bereich der stark auf Biegung beanspruchten unteren Enden der Längsholme 1 die von der mittig liegenden, neutralen Zone am weitesten entfernt liegenden Bereiche gebildet. Dadurch wird in diesen Bereichen eine gute Biegesteifigkeit bei geringem Gewicht erreicht.

Die starke Mittelzone 3 der Querschnittsfläche des Profilstückes ermöglicht die Befestigung des Lehnenrahmens und der Kopfstützenhalterung, ohne daß unzulässig hohe Flächenpressungen an der Lehne durch die Befestigungselemente entstehen. Die starke Mittelzone 3 kann auch als eine etwas höhere Profilzone mit einer Hohlkammer mit etwa rechteckförmiger Querschnittsfläche ausgeführt sein. Dadurch kann die Biegesteifigkeit des Lehnenrahmens um Biegeachsen, welche normal zur Lehnenebene liegen, erhöht werden.

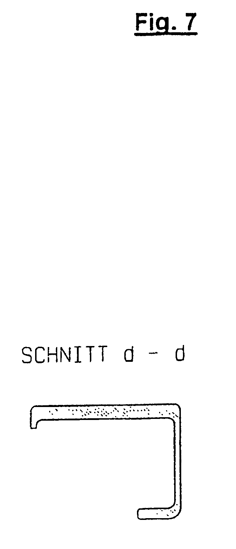

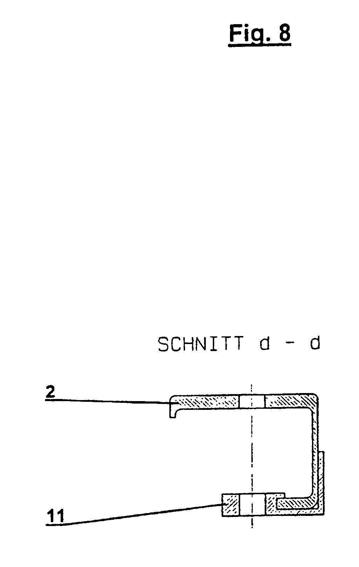

Gemäß einer vorteilhaften Weiterentwicklung werden im Bereich des Querholmes 2 zumindest an der zur Vorderseite des Lehnenrahmens hin liegenden Seite der Profilfläche der schwache Bereich 4 und der sich daran anschließende starke Bereich 5 nicht entfernt, sondern um zwei, an den beiden Rändern des schwachen Bereichs liegende profilparallele Achsen im gleichen Drehsinn um etwa 90° so gebogen, daß der schwache Bereich 4 parallel zur Lehnenebene zu liegen kommt und der starke Bereich 5 unter der starken Mittelzone 3 (Fig. 4, Fig. 7, Fig. 8). Dadurch wird erreicht, daß der Lehnenrahmen in dem Bereich, an welchen im Fall eines Unfalles der Kopf der den Sitz innehabenden Person anschlagen kann, keine scharfen Kanten aufweist. Mit dieser Bauweise wird die Anbringung von Kopfstützenhalterungen - mit denen es möglich sein muß, große Torsionsmomente in den Querholm einzuleiten - erleichtert. Ein mögliche Bauweise dafür, wobei ein zusätzlicher Halteteil 11 verwendet wird, ist in Fig. 8 skizziert.

Als Material für den Lehnenrahmen kommen vor allem herkömmliche strangpreßbare Aluminiumknetlegierungen in Frage. Da es möglich ist, das Profilteil als Walzprofil zu fertigen, kann auch die Verwendung von Stahl in Erwägung gezogen werden.

Bei der Herstellung entsprechend der Erfindung ergibt sich neben der Lösung der eingangs genannten Aufgabe der Vorteil, daß vom unteren Lehnenbereich zum oberen Lehnenbereich hin die auf die Lehnenebene normal liegende Dicke des Lehnenrahmens kontinuierlich abnimmt. Das kommt den Anforderungen an das Design von Lehnen sehr entgegen.

## Patentansprüche

1. Verfahren zur Herstellung eines aus zwei Längsholmen (1) und einem Querholm (2) bestehenden, etwa U-förmigen Rahmens einer Lehne eines Kraftfahrzeugsitzes, bei welchem die Längsholme (1) aus einem ursprünglich geraden, bandartig flachen Strangpreß- oder Walzprofilteil mit über seine Länge konstanter Querschnittsfläche gebildet werden, **dadurch gekennzeichnet, daß** auf eine starke Mittelzone (3) der über die Breite des Profilteiles gehenden Querschnittsfläche des Profilteiles, aus welchem die Längsholme (1) gebildet werden, beiderseits ein schwacher Bereich (4) und ein daran anschließender starker Bereich (5) folgen, daß das Profilteil so beschnitten wird, daß seine Breite mit steigender Entfernung von beiden Enden kontinuierlich abnimmt, und daß bezüglich der starken Mittelzone (3) außenliegende Querschnittsbereiche der Profilquerschnittsfläche um Biegeachsen, die in den schwachen Bereichen (4) liegen, um etwa 90° gebogen werden.

2. Verfahren nach Anspruch 1, **dadurch gekennzeichnet, daß** die Biegeachsen, um die die Bereiche der Profilquerschnittsfläche gebogen werden, so liegen, daß der Abstand zur starken Mittelzone (3) der Profilquerschnittsfläche mit in Profillängsrichtung zunehmenden Abstand vom breiten Profilende abnimmt.

3. Verfahren nach Anspruch 1 oder 2, **dadurch gekennzeichnet, daß** das Profilteil um Achsen, die normal zur Profilrichtung liegen, U-förmig gebogen wird.

4. Verfahren nach Anspruch 3, **dadurch gekennzeichnet, daß** im Bereich des Querholmes (2) die bezüglich der starken Mittelzone (3) der Profilquerschnittsfläche näher an der Vordersteite des Lehnenrahmens zu liegenden kommenden Profilquerschnittsbereiche um zwei zur Profilrichtung parallel liegende Achsen, welche an den Rändern des schwachen Bereichs (4) liegen, im gleichen Drehsinn um etwa 90° jeweils gebogen werden, derart, daß der schwache Bereich (4) zur Mitte der Lehnenfläche hin gebogen wird.

## Claims

1. A method for manufacturing an approximately U-shaped frame of a backrest of a motor vehicle seat consisting of two longitudinal members (1) and one transverse member (2), whereby the longitudinal members (1) are formed from an originally straight, flat strip-like extruded or rolled profile section with constant cross-sectional area over its length, **characterised in that** a thick central zone (3) of the of the cross-sectional area of the profile section extending across the width of the profile section part from which the longitudinal members (1) are formed is followed on each side by a thin portion (4) which in tum is followed by a thick portion (5), **in that** the profile section part is so trimmed that its width decreases continuously with increasing distance from each end, and **in that** cross-sectional areas of the profile section located outwardly with respect to the thick central zone (3) are bent through approximately 90° about bending axes located in the thin portions (4).

2. A method according to Claim 1, **characterised in that** the bending axes about which the portions of the cross-sectional area of the profile section are bent are so located that the distance from the thick central zone (3) of the cross-sectional area of the profile section decreases with increasing distance from the wide end of the profile section in the longitudinal direction of the profile section.

3. A method according to Claim 1 or 2, **characterised in that** the profile section part is bent to form a U-shape about axes which are perpendicular to the direction of the profile section.

4. A method according to Claim 3, **characterised in that** in the area of the transverse member (2) the portions of the cross-sectional areas of the profile section which come to be located closer to the front face of the backrest frame with respect to the thick central zone (3) of the cross-sectional area of the profile section are each so bent in the same direction of rotation through approximately 90° about two axes lying parallel to the direction of the profile section, which axes are located at the edges of the thin portion (4), that the thin portion (4) is bent towards the centre of the plane of the backrest.

## Revendications

1. Procédé de fabrication d'une armature approximativement en U, constituée de deux longerons (1) et d'une traverse (2), pour le dossier d'un siège de véhicule automobile, dans lequel les longerons (1) sont formés à partir d'un élément profilé extrudé ou laminé plat de type bande, initialement droit, avec une surface de section transversale constante sur sa longueur, **caractérisé en ce qu'**une zone centrale (3) épaisse de la section transversale de l'élément profilé, s'étendant sur la largeur de celui-ci et dans laquelle sont formés les longerons (1), est suivie des deux côtés d'une zone mince (4) et d'une zone épaisse (5) se raccordant à celle-ci, **en ce que** l'élément profilé est coupé de manière que sa largeur diminue en continu au fur et à mesure que l'on s'éloigne des deux extrémités, et **en ce que** des zones de la section transversale, situées à l'extérieur par rapport à la zone centrale épaisse (3), de la surface de la section transversale du profilé, sont repliées d'environ 90° autour d'axes de pliage qui se situent dans les zones minces (4).

2. Procédé selon la revendication 1, **caractérisé en ce que** les axes de pliage, autour desquels sont pliées les zones de la surface de la section transversale du profilé, sont tels que la distance par rapport à la zone centrale épaisse (3) de la surface de la section transversale du profilé diminue lorsque la distance par rapport à l'extrémité large du profilé augmente dans la direction longitudinale des profilés.

3. Procédé selon la revendication 1 ou 2, **caractérisé en ce que** l'élément profilé est replié en U autour d'axes qui sont perpendiculaires à la direction du profilé.

4. Procédé selon la revendication 3, **caractérisé en ce que** dans la zone de la traverse (2), les zones de la section transversale du profilé qui sont plus proches du côté avant de l'armature du dossier, par rapport à la zone centrale épaisse (3) de la surface de la section transversale du profilé, sont repliées chacune d'environ 90°, dans le même sens de rotation, autour d'axes parallèles à la direction du profilé et qui se situent sur les bords de la zone mince (4), de manière que la zone mince (4) soit repliée vers le milieu de la surface du dossier.
